**Europäisches Patentamt**

(19) **European Patent Office**

**Office européen des brevets**

(11) Numéro de publication: **0 201 422**
**B1**

(12) **FASCICULE DE BREVET EUROPEEN**

(45) Date de publication du fascicule du brevet: **14.03.90**

(21) Numéro de dépôt: **86400966.7**

(22) Date de dépôt: **05.05.86**

⑩ Une requête en rectification de la page 1 de la description à été présentée conf. à la règle 88 CBE.Il est statué sur cette reguête au cours de la procédure devant la division d'examen.

(51) Int. Cl.⁵: **H 01 M 4/58, H 01 M 6/18**

(54) **Pile solide intégrable et procédé de réalisation.**

(30) Priorité: **03.05.85 FR 8506782**

(43) Date de publication de la demande:
**12.11.86 Bulletin 86/46**

(45) Mention de la délivrance du brevet:
**14.03.90 Bulletin 90/11**

(84) Etats contractants désignés:
**AT BE CH DE FR GB IT LI LU NL SE**

(56) Documents cités:
**EP-A-0 103 470**
**EP-A-0 127 373**

**PATENTS ABSTRACTS OF JAPAN, vol. 9, no. 99 (E-311)1822r, 27 avril 1985; & JP-A-59 224 065 (HITACHI SEISAKUSHO K.K.) 15-12-1984**

**PATENTS ABSTRACTS OF JAPAN, vol. 7, no. 236 (E-205)1381r, 20 octobre 1983; & JP-A-58 126 679 (HITACHI SEISAKUSHO K.K.) 28-07-1983**

(73) Titulaire: **Balkanski, Minko**
**2, avenue de Camoens**
**F-75016 Paris (FR)**

(72) Inventeur: **Balkanski, Minko**
**2, avenue de Camoens**
**F-75016 Paris (FR)**

(74) Mandataire: **Levesque, Denys et al**
**Cabinet Beau de Loménie 55, rue d'Amsterdam**
**F-75008 Paris (FR)**

(56) Documents cités:
**SOLID STATE IONICS, vol. 9/10, Part 2, décembre 1983, pages 1445-1448, North-Holland Publishing Co., Amsterdam, NL; K. KANEHORI et al.: "Thin film solid electrolyte and its application to secondary lithium cell"**

**PATENTS ABSTRACTS OF JAPAN, vol. 6, no. 87 (E-108)965r; & JP-A-57 21 073 (TOKYO SHIBAURA DENKI K.K.) 03-02-1982**

Courier Press, Leamington Spa, England.

**Description**

Pile solide intégrable et procédé de réalisation

L'invention se rapporte tout d'abord à un procédé de réalisation d'une pile solide comprenant, superposées entre deux éléments métalliques de contact, successivement une couche d'un métal alcalin, tel que le lithium, constituant une source d'ions, une couche d'électrolyte solide superionique et une couche de composé lamellaire d'intercalation suceptible de recevoir et d'accumuler des ions issus de ladite couche de métal alcalin. Les batteries obtenues par le procédé objet de la présente invention peuvent être des batteries primaires ou secondaires. Les feuillets de la couche de composé lamellaire sont orientés de telle façon que l'angle de leur axe c et de la surface d'interface soit, de 0°, pour maximiser le coefficient de diffusion des ions Li$^+$. Le coefficient de diffusion s'élève typiquement à $10^{-9}$cm$^2$/s lorsque l'angle de l'axe c des feuilletts de la couche de composé lamellaire et de la surface d'interface est de 0°, alors que le coefficient de diffusion s'abaisse à $10^{-14}$cm$^2$/s lorsque l'angle entre les feuillets du composé lamellaire et de la surface d'interface est de 0°.

Des piles de ce genre mettent en oeuvre, outre un électrolyte solide superionique, un composé lamellaire capable d'accumuler des ions, par intercalation dans ses intervalles de Van der Waals, jusqu'à des densités considérables. L'intercalation de porteurs de charge à un taux molaire a déjà été obtenue, il est donc possible d'accommoder un ion par maille élémentaire du composé lamellaire. Cela conduit à des densités de charge de l'ordre de $10^5$ coulombs/mole et à des capacités, dans le cas de condensateurs électrolytiques, de l'ordre de $3.10^3$ farands/cm$^3$.

La présente invention a pour but de définir un procédé de réalisation de piles de ce genre, defini dans la revendication 1, permettant d'atteindre de très fortes densités de charge dans des temps de durée suffisamment faible pour être acceptable en pratique.

Le procédé consiste essentiellement à réaliser la couche de composé lamellaire par greffage direct sur la couche qui doit lui servir de substrat, au moyen des techniques de dépôt par jets moléculaires. Une telle réalisation est possible dans des enceintes à ultra-vide.

Plus particulièrement, on peut créer la couche de composé lamellaire par dépôt par jets moléculaires sur la surface du substrat, celle-ci offrant une striure de pas compatible avec celui des feuillets du composé lamellaire. La striure de la surface du substrat est obtenue par un traitement spécifique. Ce traitement consiste, par exemple, en un clivage pour obtenir des surfaces vicinales, en une attaque chimique, en la création d'un réseau de lignes chargées électriquement, en la création de sillons obtenus par balayage avec un faisceau de particules — ions, photons X, etc. Sur la striure obtenue, l'on fait croître par épitaxie les feuillets lamellaires.

Lorsque la striure est obtenue par traitement sur le métal, on peut obtenir une surface vicinale d'un métal tel que Ni ou Cu, etc, en coupant le métal près d'une surface dense. Une striure peut aussi être obtenue sur un métal en procédant à une oxydation partielle, formant, par exemple, une reconstruction P(2.2) ou P(4.4) où un atome d'oxygène est lié à un atome sur trois ou à un atome sur cinq de la surface respectivement. Une striure peut aussi être obtenue sur une surface polycristalline par attaque chimique, certaines des faces cristallines se dissolvant plus rapidement que d'autres. Une striure peut aussi être obtenue par traitement de l'électrolyte en créant un réseau de lignes chargées, obtenues en balayant la surface avec un faisceau très fin d'électrons ou bien en créant des rainures en balayant la surface avec un faisceau très fin de particules — ions, photons X, etc.

Dans une forme de réalisation du procédé selon l'invention, la couche de composé lamellaire est créée par épitaxie par jets moléculaires sur l'un des éléments de contact, et sur la couche ainsi obtenue est ensuite formée la couche d'électrolyte superionique, puis la couche de métal alcalin. A l'inverse, on peut aussi prévoir de créer la couche de composé lamellaire par épitaxie par jets moléculaires sur la couche d'électrolyte superionique, formée sur la couche de métal alcalin, après dépôt de cette dernière sur l'un des éléments de contact.

L'invention a également pour objet une pile solide ayant les caractéristiques definies dans la revendication 8. Elle est réalisée suivant la procédé défini ci-dessus et comprenant, superposées entre deux éléments métalliques de contact, successivement une couche d'un métal alcalin, tel que le lithium, constituant une source d'ions, une couche d'électrolyte solide superionique et une couche de composé lamellaire d'intercalation susceptible de recevoir et d'accumuler des ions issus de ladite couche de métal alcalin, les feuillets de la couche de composé lamellaire étant orientés sensiblement perpendiculairement à la surface d'interface qui la sépare de la couche d'électrolyte solide.

Selon l'invention, le composé lamellaire est une substance de formule InSe ou In$_2$Se$_3$, ou de formule MPX$_3$ où M est un métal choisi dans le groupe Fe, Ni et Co, P est le phosphore et X est un métalloide choisi dans le groupe O, S, Se et Te ou de formule MX$_2$ où M est un métal de transition (Ti, Zr, Hf, Nb, Ta, Mo, ou W) et X est un métalloide choisi dans le groupe O, S, Se, et Te. D'une manière générale, ce composé doit être un conducteur mixte ionique et électronique. Quant à l'électrolyte solide superionique, il doit être de haute conductivité ionique et de très faible conductivité électronique; il est de préférence constitué par un verre du type litho-borate ou un autre conducteur superionique tel que Li$_3$N ou Lil, etc.

De préférence, les trois couches précitées (anode-source d'ions, électrolyte conducteur superionique et cathode-composé d'intercalation) sont constituées par des dépôts réalisés successivement sur l'un des éléments métalliques de contact, ce qui conduit à une structure où les interfaces électrolyte/électrodes sont formées par croissance continue et constituent des hétérojonctions. Les couches sont avantageusement des couches minces, d'éppaisseur inférieure à 1 µm.

En ce qui concerne la couche de composé lamellaire, de l'orientation des feuillets qui le constituent par rapport à son substrat dépend l'efficacité de l'intercalation, qui détermine la capacité de la pile. Celle-ci sera optimale si toute la couche de composé lamellaire est complètement intercalée au moins à la concentration molaire, chaque maille élémentaire ayant alors reçu un ion d'intercalation. L'épaisseur maximale de cette couche est fonction du coefficient de diffusion des ions d'intercalation, ainsi que de la durée du processus d'intercalation.

En ce qui concerne la couche d'électrolyte superionique, son épaisseur peut descendre largement en dessous de 1 µm, tout en restant suffisante pour que la résistance électrique de la couche demeure très élevée et pour éviter le claquage diélectrique sous l'effet de la tension de la pile. Ainsi, ladite couche reste un isolant électronique presque parfait, ce qui autorise une grande durée de stockage pour la pile hors utilisation. Par contre, sa résistance ionique est favorablement abaissée du fait de la diminution de son épaisseur. Lorsque l'épaisseur de l'électrolyte est de l'ordre de grandeur du libre parcours moyen des ions, leur mobilité sera extrêmement élevée et leur conductivité ionique extrêmement grande.

Les couches constitutives d'anode, d'électrolyte et de cathode de la pile peuvent être elles-mêmes formées de plusieurs couches ou films minces.

L'invention concerne également une pile obtenue par répétition des trois couches précitées d'une pile élémentaire telle que décrite ci-dessus.

Il ressort de ce qui précède que l'invention permet de réaliser des piles solides microminiaturisées de forte capacité que, de par leur structure et leurs dimensions, sont parfaitement compatibles avec les circuits intégrés largement utilisés dans le domaine de l'électronique. Un circuit intégré, incorporant pareille pile, offre, sous un volume à peine supérieur, une complète autonomie de fonctionnement.

D'autres caractéristiques et avantages de l'invention ressortiront plus clairement de la description qui va suivre, en regard des dessins annexés, d'un exemple de réalisation non limitatif.

La figure 1 représente schématique, en perspective et à échelle fortement agrandie, une pile solide selon l'invention.

La figure 2 représente schématiquement un appareillage permettant de réaliser la pile de la figure 1.

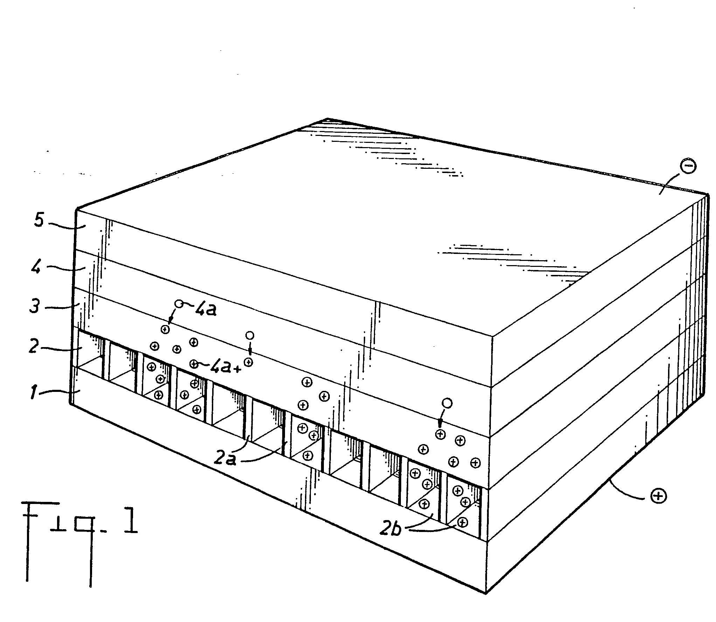

La pile représentée à la figure 1 se compose de couches minces superposées entre deux éléments de contact. Elle comprend ainsi:

un élément de contact métallique 1 en nickel, constitué par un substrat épais ou une couche mince déposée sur un substrat:

une couche mince 2 de composé lamellaire d'intercalation, par exemple InSe, dont les feuillets 2a sont orientés dans la direction de l'épaisseur de la couche, au mieux perpendiculairement à la surface de cette dernière;

une couche mince 3 constituée par un conducteur superionique (électrolyte solide), savoir un verre du type lithio-borate de formule $B_2S_3$—LiS—LiI;

une couche mince 4 de lithium, formant une source d'ions $4a^+$ pour la couche d'électrolyte 3;

Une couche mince 5 de contact métallique en nickel.

La couche lamellaire 2 constitue la cathode de la pile et c'est à l'élément de contact 1 adjacent qu'est relié la pôle, positif, tandis que la couche de lithium 4 constitue l'anode, le pôle négatif étant relié à l'élément de contact 5 adjacent.

Durant l'opération de charge de la pile, les atomes de lithium, 4a de la couche 4 sont ionisés dans la couche d'électrolyte 3 et les ions $4a+$ atteignent la couche lamellaire d'intercalation 2 et pénètrant directement dans les intervalles de Van der Waals 2b séparant les feuillets 2a. Ces intervalles se remplissent ainsi d'ions $4a+$ jusqu'à la concentration molaire d'un ion pour chaque maille InSe de la couche 2.

Il apparaît ainsi une différence de potentiel entre les couches 2 et 4, donc entre les éléments de contact 1 et 5, l'élément 1 se trouvant porté à un potentiel positif par rapport à celui de l'élément 5. Cette différence de potentiel est susceptible de créer un courant de décharge dans un circuit utilisateur connecté aux bornes + et − de la pile, car le processus d'intercalation des ions dans la couche 2 est un phénomène réversible.

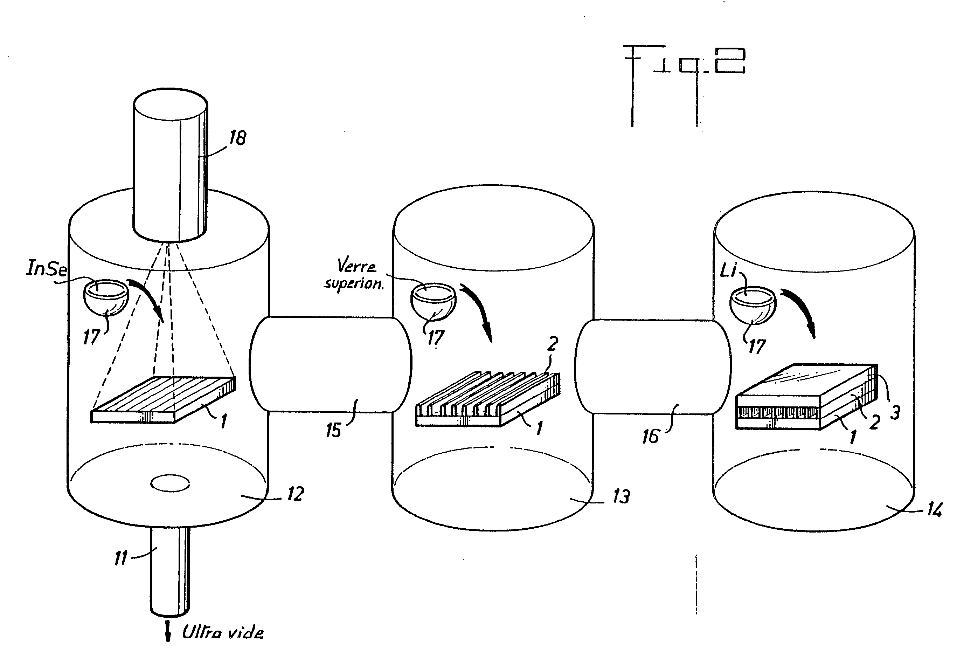

Pour réaliser la pile de la figure 1, ou peut utiliser l'appareillage représente à la figure 2. Celui-ci comprend trois enceintes 12, 13, 14 à ultra-vide, reliées entre elles par des sas 15 et 16, ainsi qu'à une pompe à ultra-vide par un conduit 11. Chaque enceinte renferme un four à jets moléculaires 17, dans lequel est placée une substance qui peut être vaporisée, grâce à un moyen de chauffage non représenté, en vue de l'obtention d'un dépôt de ladite substance sur un substrat introduit dans l'enceinte.

Dans la première enceinte 12 est disposé un substrat métallique 1 de nickel, et la substance InSe destinée à former la couche lamellaire 2 est placée dans le four 17 correspondant. Un dispositif 18, annexé à l'enceinte, est prévu pour former par bombardement de particules un réseau à la surface du substrat 1, formé de lignes parallèles chargées électriquement et espacées au pas des feuillets du composé lamellaire InSe. Le dispositif 18 comprend à cet effet une source de particules (ions, électrons ou photons X) associée à un canon à ions conçu pour que le bombardement du substrat 1 puisse être effectué suivant les lignes du réseau désiré.

Ainsi, dans cette première enceinte 12, la substrat 1 reçoit une couche de composé InSe qui croît suivant les germes formés par les jets moléculaires sur les lignes du réseau créé sur le substrat par le dispositif 18. Ce dernier assure l'amorçage de la formation épitaxiale des feuillets sur lesdites lignes; son fonctionnement peut ensuite être arrêté.

L'obtention d'une greffe propre du composé lamellaire 2 sur le substrat métallique 1 implique tout d'abord un traitement approprié du substrat, comprenant un nettoyage suivi, en cas de besoin, du dépôt d'une couche adsorbée, afin de préparer une surface ordonnée offrant un paramètre d'ordre compatible avec les caractéristiques du composé lamellaire à déposer. Elle implique d'autre part le respect de conditions conduisant à une croissance épitaxiale convenable des germes créés suivant le réseau imprimé sur la surface substrat, de sorte que les plans d'intercalation traversent de façon continue la couche formée.

Puis le substrat 1, revêtu de la couche 2 de InSe dont les feuillets se dressent perpendiculairement à la surface du substrat, est transféré, via le sas 15, dans la seconde enceinte 13, dont le four 17 contient du verre lithio-borate superionique $B_2S_3$—Lis—LiI. Cette substance y forme une couche mince 3 par dépôt épitaxial sur la couche 2.

L'ensemble 1, 2, 3 est alors transféré dans la troisième enceinte 14, via le sas 16, où il reçoit une couche mince 4 de lithium qui se forme par épitaxie sur la couche superionique 2.

Enfin est réalisé un dépôt métallique 5 sur la couche 4.

Il est également possible de procéder dans l'ordre inverse et de déposer sur l'élément de contact 5 l'anode en lithium 4, sur laquelle est ensuite déposé l'électrolyte conducteur superionique 3. C'est sur cette couche d'électrolyte qu'est alors formé le réseau de charge qui permet l'epitaxie par jets moléculaires de la cathode de composé lamellaire 2 avec des feuillets 2a, perpendiculaires à la couche d'électrolyte 3.

Il convient que l'enceinte principale 12, où doit s'effectuer la greffe épitaxiale, sur le substrat 1, des feuillets du composé lamellaire d'intercalation, soit dotée de moyens de caractérisation tant cristallographie (LEED) que chimique (spectrométrie Auger localisée) et électronique (XPS et UPS), permettant de contrôler le bon déroulement des différentes étapes du procédé.

**Revendications**

1. Procédé de réalisation d'une pile solide comprenant, superposées entre deux éléments métalliques de contact, successivement une couche d'un métal alcalin (4), une couche d'électrolyte solide superionique (3) et une couche de composé lamellaire d'intercalation (2), ce procédé étant caractérisé par le fait que la couche de composé lamellaire (2) est obtenue par greffage direct puis croissance épitaxiale sur un substrat constitué par l'une des couches entre lequelle elle doit être interposée dans la pile achevée, en effectuant un dépôt par jets moléculaires sur la surface dudit substrat, celle-ci offrant, grâce à un traitement spécifique préalable, une striure de pas compatible avec celui des feuillets (2a) du composé lamellaire (2), laquelle impose au dépôt son orientation de croissance par épitaxie.

2. Procédé selon la revendication 1, caractérisé par le fait que le traitement consiste à induire un réseau composé de lignes chargées électriquement, sur lesquelles viennent croître par épitaxie, dans l'orientation imposée par le réseau, les feuillets (2a) du composé lamellaire (2).

3. Procédé selon la revendication 1, caractérisé par le fait que le traitement consiste à créer des sillons par balayage de la surface du substrat avec un faisceau très fin de particules — ions ou photons X.

4. Procédé selon la revendication 1, caractérisé par le fait que le traitement consiste en un clivage pour obtenir des surfaces vicinales sur le substrat.

5. Procédé selon la revendication 1, caractérisé par le fait que le traitement consiste en une attaque chimique de la surface du substrat.

6. Procédé selon l'un quelconque des revendications 1 à 5, caractérisé par le fait que la couche de composé lamellaire (2) est créée par épitaxie par jets moléculaires sur l'un (1) des éléments de contact, et que sur la couche ainsi obtenue est ensuite formée la couche d'électrolyte superionique (3), puis la couche de métal alcalin (4).

7. Procédé selon l'un quelconque des revendications 1 à 5, caractérisé par le fait que la couche de composé lamellaire (2) est créée par épitaxie par jets moléculaires sur la couche d'électrolyte superionique (3), formée sur la couche de métal alcalin (4), après dépôt de cette dernière sur l'un 5 des éléments de contact.

8. Pile solide comprenant, superposées entre deux éléments métalliques de contact (1, 5), successivement une couche d'un métal alcalin (4), tel que le lithium, constituant une source d'ions, une couche d'électrolyte solide superionique (3) et une couche de composé lamellaire d'intercalation (2) susceptible de recevoir et d'accumuler des ions (4a+) issus de ladite couche de métal alcalin, les feuillets (2a) de la couche de composé lamellaire (2) étant orientés perpendiculairement à la surface d'interface qui la sépare de la couche d'électrolyte solide (3), la pile étant caractérisée par le fait que le composé lamellaire est une substance de formule InSe ou $In_2Se_3$, ou de formule $MPX_3$ où M est un métal choisi dans le groupe Fe, Ni et Co, P est le phosphore et X est un métalloide choisi dans le groupe O, S, Se et Te ou de formule $MX_2$ où M est un métal de transition (Ti, Zr, Hf, Nb, Ta, Mo ou W) et X est un métalloide choisi dans le groupe O, S, Se, et Te.

9. Pile selon la revendication 8, caractérisée par le fait que l'électrolyte solide superionique est un verre du type lithio-borate ou un conducteur superionique cristallin.

10. Pile selon la revendication 8 ou 9, caractérisée par le fait que ses couches d'anode, d'électrolyte et de cathode sont elles-mêmes constituées de plusieurs couches.

11. Pile comprenant une superposition multiple de trois couches de la batterie élémentaire de l'une quelconque des revendications 8 à 10.

## Patentansprüche

1. Verfahren zur Herstellung einer Feststoffzelle, die übereinanderliegend zwischen zwei metallischen Kontaktelementen in Folge eine Alkalimetallschicht (4), eine Schicht (3) eines superionischen Festelektrolyten und eine Schicht (2) einer lamellaren Einlagerungverbindung aufweist, welches Verfahren dadurch gekennzeichnet ist, daß die Schicht (2) einer lamellaren Verbindung durch direkte Implantierung und danach epitaktisches Wachstum auf einem Substrat, das aus einer der Schichten gebildet wird, zwischen denen sie in der fertigen Zelle eingefügt sein muß, durch Bewirkung einer Abscheidung durch Molekularstrahlen auf der Oberfläche des Substrats ethalten wird, die dank einer besonderen Vorbehandlung eine Rillung einer mit der der Lamellen (2a) der lamellaren Verbindung (2) kompatiblen Teilung aufweist, die der Abscheidung ihre Ausrichtung zum Wachstum durch Epitaxie verleiht.

2. Verfahren nach dem Anspruch 1, dadurch gekennzeichnet, daß die Behandlung darin besteht, ein Netz zu erzeugen, das aus elektrisch geladenen Linien zusammengesetzt ist, auf denen in der durch das Netz verliehenen Ausrichtung die Lamellen (2a) der lamellaren Verbindung (2) durch Epitaxie wachsen werden.

3. Verfahren nach dem Anspruch 1, dadurch gekennzeichnet, daß die Behandlung darin besteht, Rillen durch Abtasten der Oberfläche des Substrats mit einem sehr feinen Bündel von Ionenteilchen oder X-Photonen zu erzeugen.

4. Verfahren nach dem Anspruch 1, dadurch gekennzeichnet, daß die Behandlung in einer Spaltung zum Erhalten von Vizinaloberflächen auf dem besteht.

5. Verfahren nach dem Anspruch 1, dadurch gekennzeichnet, daß die Behandlung in einem chemischen Angriff der Oberfläche des Substrats besteht.

6. Verfahren nach irgendeinem der Ansprüche 1 bis 5, dadurch gekennzeichnet, daß die Schicht (2) einer lamellaren Verbindung durch Epitaxie durch Molekularstrahlen auf einem (1) der Kontaktelemente erzeugt wird und daß auf der so erhaltenen Schicht anschließend die Schicht (3) eines superionischen Elektrolyten und dann die Alkalimetallschicht (4) gebildet werden.

7. Verfahren nach irgendeinem der Ansprüche 1 bis 5, dadurch gekennzeichnet, daß die Schicht (2) einer lamellaren Verbindung durch Epitaxie durch Molekularstrahlen auf der Schicht (3) aus superionischem Elektrolyt erzeugt wird, die auf der Alkalimetallschicht (4) nach Abscheidung dieser letzteren auf einem (5) der Kontaktelemente gebildet ist.

8. Feststoffzelle, die übereinanderliegend zwischen zwei metallischen Kontaktelementen (1, 5) in Folge eine Alkalimetallschicht (4), wie z.B. Lithium, die eine Ionenquelle darstellt, eine Schicht (3) eines superionischen Festelektrolyten une eine Schicht (2) einer lamellaren Einlagerungverbindung aufweist, die sich zur Aufnahme und Ansammlung der von der Alkalimetallschicht abgegebenen Ionen (4a+) eignet, wobei die Lamellen (2a) der Schicht (2) einer lamellaren Verbindung senkrecht zur Grenzfläche ausgerichtet sind, die sie von der Festelektrolytschicht (3) trennt, dadurch gekennzeichnet, daß die lamellare Verbindung ein Stoff der Formel InSe oder $In_2Se_3$, oder der Formel $MPX_3$, wo M ein in der Gruppe Fe, Ni und Co gewähltes Metall ist, P Phosphor ist une X ein in der Gruppe O, S, Se und Te gewähltes Metalloid ist, oder der Formel $MX_2$ ist, wo M ein Übergangsmetall (Ti, Zr, Hf, Nb, Ta, Mo oder W) ist und X ein in der Gruppe O, S, Se und Te gewähltes Metalloid ist.

9. Zelle nach dem Anspruch 8, dadurch gekennzeichnet, daß der superionische Festelektrolyt ein Glas des Lithiumborattyps oder ein kristalliner superionischer Leiter ist.

10. Zelle nach dem Anspruch 8 oder 9, dadurch gekennzeichnet, daß die Anoden-, Elektrolyt- und Kathodenschichten selbst aus mehreren Schichten gebildet sind.

11. Zelle, die eine Viefachübereinanderschichtung der drei Schichten der Elementarbatterie irgendeines der Ansprüche 8 bis 10 aufweist.

## Claims

1. Process for producing a solid state battery successively comprising, superposed between two metallic contact elements, a layer of an alkali metal (4), a layer of superionic solid electrolyte (3) and a layer of a layered intercalation compound (2), said process being characterized by the fact that the layer of layered intercalation compound (2) is obtained by direct grafting followed by epitaxial growth on a substrate constituted by one of the layers between which it is designed to be interposed in the completed battery, by molecular beam deposition on the surface of said substrate, said surface presenting, by virtue of a preliminary specific treatment, a corrugation whose pitch is compatible with that of the lamellae (2a) of the layered compound (2), which corrugation imposes to the deposition its orientation of growth by epitaxy.

2. Process according to claim 1, characterized by the fact that the treatment consists in inducing a grating composed of electrically charged lines on which the lamellae (2a) of the layered compound (2) grow by epitaxy, with the orientation imposed by the grating.

3. Process according to claim 1, characterized by the fact that the treatment consists in creating grooves by scanning the surface of the substrate with a very fine beam of particles — ions or X photons.

4. Process according to claim 1, characterized by the fact that the treatment consists in a clivage to obtain vicinal surfaces on the substrate.

5. Process according to claim 1, characterized by the fact that the treatment consists in a chemical etching of the substrate surface.

6. Process according to any one of claims 1 to 5, characterized by the fact that the layer of layered compound (2) is created by molecular beam epitaxy on one (1) of the contact elements, and that, on the layer thus obtained, the layer of superionic electrolyte (3), then the layer of alkali metal (4) are formed.

7. Process according to any one of claims 1 to 5, characterized by the fact that the layer of layered compound (2) is created by molecular beam epitaxy on the layer of superionic electrolyte (3), formed on the layer of alkali metal (4), after desposit of said latter layer on one (5) of the contact elements.

8. Solid state battery successively comprising, superimposed between two metallic contact elements (1, 5), a layer of an alkali metal (4) such as lithium, constituting a source of ions, a layer of a superionic solid electrolyte (3), and a layer of a layered intercalation compound (2) capable of receiving and accumulating ions (4a+) issued from said alkali metal film, the lamellae (2a) of the film of layered compound (2) being oriented perpendicularly to the interface surface separating it from the solid electrolyte layer (3), said battery being characterized by the fact that the layered compound is a substance of formula InSe or $In_2Se_3$, or the formula $MPX_3$ where M is a metal selected from the group Fe, Ni and Co, P is phosphorus and X is a metalloid selected from the group O, S, Se and Te or of formula $MX_2$ where M is a transition metal selected from the group Ti, Zr, Hf, Nb, Ta, Mo or W and X is a metalloid selected from the group O, S, Se, and Te.

9. Battery according to claim 8, characterized by the fact that the superionic solid electrolyte is a glass of the lithio-borate kind or a crystalline superionic conductor.

10. Battery according to claim 8 or 9, characterized by the fact that its respective anode, electrolyte and cathode layers are themselves constituted of several layers.

11. Battery comprising a multiple superposition of three layers of the elementary battery according to any one of claims 8 to 10.

Fig. 1

Fig.2